Europäisches Patentamt

European Patent Office

Office européen des brevets

(19)

(11) Numéro de publication : **0 113 636**
**B1**

(12) # FASCICULE DE BREVET EUROPÉEN

(45) Date de publication du fascicule du brevet :
29.07.87

(51) Int. Cl.⁴ : **B 27 H   1/00**, B 27 J   5/00,
**B 29 C  45/14**

(21) Numéro de dépôt : **83420176.6**

(22) Date de dépôt : **23.11.83**

(54) **Procédé pour galber des panneaux.**

(30) Priorité : **11.01.83 FR 8300730**

(43) Date de publication de la demande :
**18.07.84 Bulletin 84/29**

(45) Mention de la délivrance du brevet :
**29.07.87 Bulletin 87/31**

(84) Etats contractants désignés :
**AT BE CH DE GB IT LI NL SE**

(56) Documents cités :
**DE-A- 2 047 213**
**FR-A- 1 009 655**
**FR-A- 1 407 876**
**FR-A- 2 212 220**
**FR-A- 2 234 107**
**FR-A- 2 342 843**
**US-A- 1 789 137**

(73) Titulaire : **ALLIBERT S.A. Société anonyme dite:**
**129, avenue Léon Blum**
**F-38042 Grenoble Cedex (FR)**

(72) Inventeur : **Delon, Bernard**
**26 route de Chartreuse**
**F-38700 La Tronche (FR)**

(74) Mandataire : **Maureau, Bernard**
**CABINET GERMAIN & MAUREAU 20, boulevard E.**
**Deruelle B.P. 11**
**F-69392 Lyon Cédex 06 (FR)**

Jouve, 18, rue St-Denis, 75001 Paris, France

EP 0 113 636 B1

## Description

L'invention a pour objet un procédé permettant de galber les panneaux constitués en bois ou en matériau aggloméré à base de fibres de bois ou de copeaux de bois.

Dans certaines applications, par exemple les meubles, il est utile de disposer non seulement de panneaux plats mais aussi de panneaux galbés. Si la fabrication des panneaux plats ne pose aucun problème, il n'en est pas de même pour ceux galbés. Leur fabrication nécessite en effet d'associer le panneau à des tasseaux dont la face en contact avec le panneau présente le galbe recherché et sur lequel ils sont appliqués sous pression et ils sont maintenus par collage. La fabrication d'un panneau galbé entraîne donc la fabrication préalable de tasseaux et conduit à lier le panneau et les tasseaux. Il en résulte deux opérations supplémentaires qui renchérissent fortement le panneau ; et lorsque le panneau galbé est obtenu, il est soumis à d'autres opérations éventuelles, notamment par exemple : collage de chants, fixation d'accessoires tels qu'éléments de charnières, glissières...

Or il est connu par le FR-A-1.407.876 un procédé qui utilise le moulage d'une résine synthétique pour la fabrication d'un produit mixte bois-résine synthétique ayant une forme galbée et dont la résine constitue le corps, alors que le bois est un élément décoratif. Selon ce procédé, une feuille de bois est placée entre la matrice et le poinçon d'un moule déterminant le galbe recherché, au moins une rainure est aménagée dans cette matrice en regard du panneau et une résine synthétique est injectée dans cette rainure pour la formation d'une nervure sous le panneau.

L'invention réside dans une application nouvelle de ce procédé à la fabrication de panneaux galbés destinés à la fabrication de meubles. Selon ce procédé, dans la face inférieure du panneau est aménagée au moins une rainure s'étendant sur toute sa longueur ou toute sa largeur dans le sens du galbe à réaliser, cette rainure étant située en correspondance de la rainure de la matrice lorsque le panneau est placé entre la matrice et le poinçon du moule, la nervure constituée par la résine injectée dans le moule s'étendant ainsi partiellement hors du panneau et partiellement dans ce panneau.

Par une simple opération de moulage, ce procédé permet de donner au panneau le galbe désiré. Il s'agit là d'un premier avantage essentiel auquel s'ajoutent d'ailleurs d'autres avantages importants. L'utilisation d'une résine synthétique pour permettre le maintien du galbe du panneau permet en effet de mettre en œuvre la même résine pour réaliser divers aménagements sur ce panneau.

Il est avantageux, à cet effet, d'aménager dans la face inférieure du panneau au moins une rainure qui s'étend sur toute sa longueur ou toute sa largeur dans le sens du galbe à réaliser et est située en correspondance de la rainure (12) de la matrice (6) lorsque le panneau (1) est placé entre la matrice (6) et le poinçon (7) du moule, la nervure (2) constituée par la résine injectée dans le moule s'étendant alors partiellement hors du panneau (1) et partiellement dans ce panneau ; et ce sont précisément cette ou ces rainures aménagées dans le panneau et la matrice qui, selon une autre caractéristique de l'invention, peuvent être mises en communication avec un espace périphérique libre aménagé entre le panneau et la matrice, de telle sorte que la même résine permet, au cours d'une unique opération de moulage, de réaliser à la fois les nervures de maintien du galbe et les chants du panneau.

D'autres accessoires peuvent, conformément à l'invention, venir de moulage avec ces nervures et ces chants. Il faut pour cela que dans la matrice et/ou dans le poinçon soient aménagés des logements qui communiquent avec les rainures du panneau et de la matrice et dont le profil et les dimensions déterminent ceux de ces accessoires.

L'invention sera bien comprise d'ailleurs à l'aide de la description qui suit en référence au dessin schématique annexé représentant à titre d'exemple non limitatif une forme d'exécution d'un panneau galbé selon ce procédé :

Figure 1 est une vue en perspective et par dessous du panneau galbé ;

Figure 2 en est, à plus grande échelle, une vue en coupe transversale suivant 2/2 de figure 1 ;

Figure 3 en est une vue partielle en perspective et par dessous avant son opération de galbage ;

Figure 4 est une vue en coupe longitudinale de l'ensemble moule et panneau après fermeture du moule mais avant injection de la résine synthétique, et ;

Figure 5 est une vue en coupe transversale suivant 5/5 de figure 4.

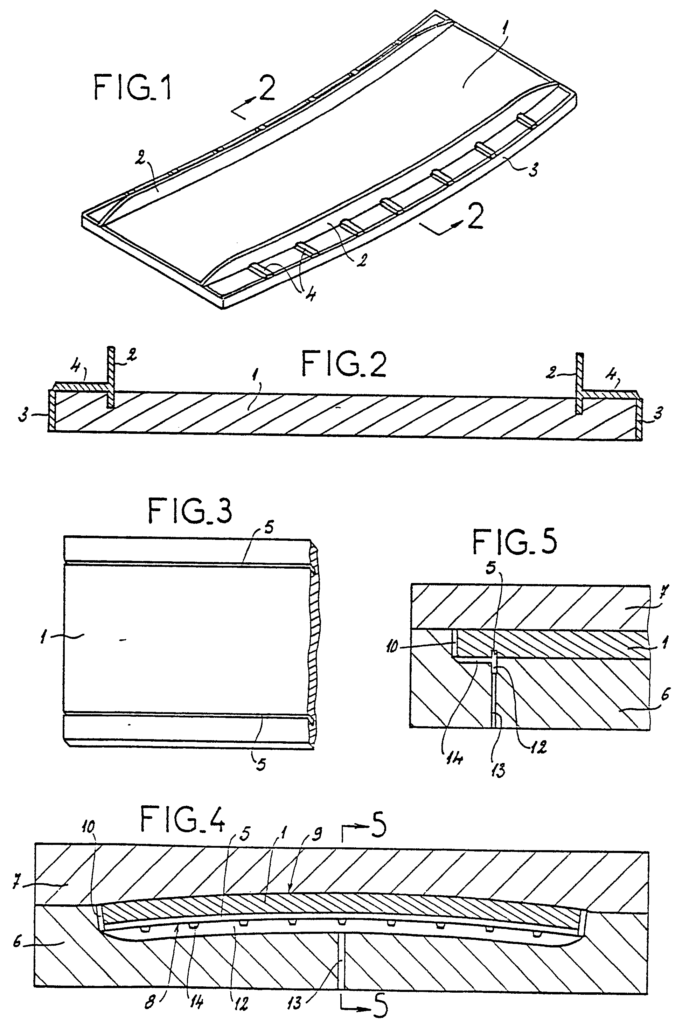

Le panneau (1) représenté aux figures 1 et 2 est constitué en un matériau aggloméré à base de fibres de bois. Il présente sur sa face intérieure des nervures (2) qui sont constituées en résine synthétique et sont disposées longitudinalement dans le sens du galbe du panneau. Sur sa périphérie, le panneau (1) comporte un chant (3) qui est constitué par la même résine que les nervures (2) et est relié à elles, d'une part, à leur extrémité et, d'autre part, par des petits pontets (4) en contact avec la face intérieure du panneau.

Ce panneau galbé (1) est réalisé, au départ, d'un panneau plat dans lequel sont aménagées deux rainures longitudinales (5) ; et son galbage est obtenu grâce à l'utilisation d'un moule dont l'agencement est ci-après décrit.

Ce moule est constitué d'une matrice (6) et d'un poinçon (7) qui délimitent un espace creux ou chambre dont les faces inférieure (8) et supérieure (9) sont respectivement convexe et concave. La hauteur de cette chambre est égale à l'épaisseur du panneau (1) ; la longueur et la largeur de cette chambre sont légèrement supérieures à la longueur et à la largeur du même panneau afin de ménager un espace périphérique libre (10) déterminant l'épaisseur du chant (3) devant être prévu à la périphérie du panneau (1).

La matrice (6) présente, en regard du panneau (1), deux rainures longitudinales (12) dont les dimensions et dont la position correspondent à celles (5) du panneau (1) ; et c'est par un canal (13) traversant le fond de la matrice (6) et débouchant dans au moins l'une des deux rainures (12) qu'est introduite la résine synthétique destinée à maintenir le galbe du panneau.

Dans la face supérieure de la matrice est en outre aménagée une pluralité de petits canaux transversaux (14) qui débouchent d'une part dans les rainures longitudinales (12) et d'autre part a l'extérieur.

L'opération de galbage du panneau (1) est effectuée suivant le processus ci-après :

Le moule étant ouvert, le panneau à l'état plat est posé sur la matrice (6). Par fermeture du moule, c'est-à-dire par appui du poinçon (7) sur la matrice (6), le panneau (1) se galbe en adoptant le profil de la chambre délimitée par la matrice (6) et par le poinçon (7). Le panneau est ainsi d'ores et déjà galbé.

Pour conserver son galbe, une résine synthétique est injectée au travers du canal (13) dans les chambres que délimitent les rainures (12) de la matrice (6) et les rainures (5) du panneau (1) ; et du fait de la correspondance de ces chambres avec la chambre périphérique (10) et avec les canaux transversaux (14), la résine synthétique remplit tous les espaces vides délimités entre le panneau (1), la matrice (6) et le poinçon (7). La résine synthétique est dans ces conditions amenée à constituer :

d'une part, deux ailes ou nervures longitudinales (2) qui s'étendent sur toute la longueur du panneau (1) et sont partiellement noyées dans ce panneau et partiellement en relief sur sa face inférieure ;

d'autre part, un chant périphérique (3) ;

et d'autre part encore, des pontets (4) qui, en contact avec la face inférieure du panneau (1), relient les nervures (2) et le chant périphérique (3).

Lorsqu'après avoir été injectée la résine est refroidie ou polymérisée, elle adhère définitivement au panneau (1). Le moule peut alors être ouvert et le panneau (1) sortant du moule possède et conserve définitivement le galbe qui lui a été donné dans le moule.

Par une même et unique opération de moulage, l'invention permet donc de galber définitivement un panneau et de réaliser sur ce panneau un chant périphérique en résine et éventuellement tous autres accessoires qui mériteraient d'être prévus sur la face intérieure et éventuellement sur la face extérieure du panneau.

Comme il va de soi, l'invention ne se limite pas à la seule forme d'exécution de ce panneau galbé et au seul mode de mise en œuvre de son procédé de galbage qui ont été ci-dessus indiqués à titre d'exemple : elle en embrasse au contraire toutes les variantes, quels que soient notamment la nature du panneau et les accessoires pouvant être réalisés lors de son opération de galbage, et elle étend son champ d'application aux cas où :

la rainure (5) du panneau (1) est remplacée par une pluralité de trous borgnes qui, lorsque ce panneau est placé dans le moule, sont alignés avec la rainure (12) de la matrice (6) ;

et des moyens physiques ou physico-chimiques sont mis en œuvre pour réaliser, pendant la phase de galbage, la liaison entre le panneau (1) et la nervure (2).

**Revendications**

1. Procédé pour galber des panneaux (1) constitués en bois ou en matériau aggloméré et destinés à la fabrication de meubles, dans lequel un panneau est placé entre la matrice, (6) et le poinçon (7) d'un moule déterminant le galbe recherché, au moins une rainure (12) est aménagée dans cette matrice en regard du panneau, et une résine synthétique est injectée dans cette rainure pour la formation d'une nervure sous le panneau, caractérisé en ce que, dans la face inférieure du panneau (1) est aménagée au moins une rainure (5) s'étendant sur toute sa longueur ou toute sa largeur dans le sens du galbe à réaliser, cette rainure étant située en correspondance de la rainure (12) de la matrice (6) lorsque le panneau (1) est placé entre la matrice (6) et le poinçon (7) du moule, la nervure (2) constituée par la résine injectée dans le moule s'étendant ainsi partiellement hors du panneau (1) et partiellement dans ce panneau.

2. Procédé selon la revendication 1, caractérisé en ce que la ou les rainures (5, 12) aménagées respectivement dans le panneau (1) et dans la matrice (6) sont en communication avec un espace périphérique libre (10) aménagé entre le panneau (1) et la matrice (6), de telle sorte que la même résine constitue à la fois les nervures (2) de maintien du galbe et les chants (3) du panneau.

3. Procédé selon les revendications 1 et 2, caractérisé en ce que dans la face supérieure de la matrice sont aménagés des canaux transversaux (14) débouchant d'une part dans les rainures longitudinales (12) et d'autre part dans la chambre périphérique (10), ces canaux (14) conduisant la résine synthétique à constituer des pontets de liaison (4) entre les nervures longitudinales ( 2) et les chants (3) du panneau.

4. Procédé selon la revendication 1, caractérisé en ce que dans la face inférieure du panneau (1) sont aménagés des trous borgnes situés en correspondance avec la rainure (12) de la matrice (6), la nervure (2) constituée par la résine synthétique injectée dans le moule donnant ainsi lieu à la formation de doigts pénétrant dans le panneau (1) et réalisant la liaison définitive de cette nervure avec le panneau.

5. Procédé selon la revendication 1, caractérisé en ce que la liaison définitive entre le panneau (1) et la nervure (2) constituée par la résine synthétique injectée dans la rainure (12) est obtenue par voie chimique ou physico-chimique.

6. Procédé selon l'une quelconque des revendications 1 à 5, caractérisé en ce que la matrice (6) présente au moins une chambre en communication avec la ou les rainures (12), et dont la forme et les dimensions déterminent celles d'un accessoire à réaliser sur la face intérieure du panneau.

7. Procédé selon l'une quelconque des revendications 1 à 6, caractérisé en ce que le poinçon (7) présente au moins une chambre de communication avec la chambre périphérique (10) et dont la forme et les dimensions déterminent celles d'un accessoire à réaliser sur la face extérieure du panneau.

**Claims**

1. A method of maintaining a bend in a board (1) made of wood or consolidated material and intended for use in the manufacture of furniture, in which a board is placed between the matrix (6) and the punch (7) of a mould which determines the amount of bend produced, at least one longitudinal groove (12) is provided in the matrix facing the board, and a synthetic resin is injected into this groove to form a rib on the underside of the board ; characterised in that the underside of the board (1) is provided along its whole length or its whole width with a least one longitudinal groove (5) which extends in the direction in which the bend is to be formed, this groove (5) being situated in such a way that it corresponds to the longitudinal groove (12) of the matrix (6) when the board (1) is placed between the matrix (6) and the punch (7) of the mould, whereby a rib (2), constituted by the resin injected into the mould, projects partially out of the board (1) and partially into the board.

2. A method according to claim 1, characterised in that the grooves (5, 12), provided respectively in the board (1) and in the matrix (6), are connected to a peripheral space (10) provided between the board (1) and the matrix (6) in such a way that the same resin constitutes both the rib(s) (2) for maintaining the bend and edges (3) of the board.

3. A method according to claims 1 and 2, characterised in that in the upper face of the matrix there are arranged transverse grooves (14) which are in communication with, at their one ends, the longitudinal grooves (12), and, at their other ends, the peripheral space (10), these transverse grooves (14) guiding the synthetic resin which forms connecting bars (4) between the longitudinal rib(s) (2) and the edges (3) of the board.

4. A method according to claim 1, characterised in that the underside of the board (1) is provided with finger holes situated in such a way that they correspond to the longitudinal groove (12) of the matrix (6), the injection of the synthetic resin into the mould to form the rib (2) thereby giving rise to the formation of fingers which penetrate the board (1) and form a permanent bond between the rib and the board.

5. A method according to claim 1, characterised in that the permanent bond between the rib (2) and the board (1) formed by the synthetic resin injected into the longitudinal groove (12) is obtained by chemical or physico-chemical means.

6. A method according to any one of claims 1 to 5, characterised in that the matrix (6) defines at least one chamber connected to the groove or grooves (12), the form and dimensions of which determine those of an attachment to be formed on the underside of the board.

7. A method according to any one of claims 1 to 6, characterised in that the punch (7) defines at least one chamber connected to the peripheral space (10), the form and dimensions of which determine those of an attachment to be formed on the outer face of the board.

**Patentansprüche**

1. Verfahren zum Wölbverformen von Platten (1), die aus Holz oder aus Preßmaterial bestehen und zur Möbelherstellung bestimmt sind, wobei eine Platte zwischen die Matrize (6) und den Stempel (7) einer die gewünschte Wölbung bestimmenden Form eingelegt wird, wobei wenigstens ein der Platte zugewandter Schlitz (12) in der Matrize ausgebildet ist, und wobei zur Bildung eines an der Platte ausgebildeten Steges in diesen Schlitz ein Kunstharz eingespritzt wird, dadurch gekennzeichnet, daß an der Unterseite der Platte (1) wenigstens ein Schlitz (5) ausgebildet ist, welcher sich über deren gesamte Länge oder deren gesamte Breite in Richtung der gewünschten Wölbung erstreckt, wobei dieser Schlitz sich mit dem Schlitz (12) der Matrize (6) deckt, wenn die Platte (1) zwischen die Matrize (6) und den Stempel (7) der Form eingelegt worden ist, so daß der durch das in die Form eingespritzte Kunstharz gebildete Steg (2) teilweise außerhalb der Platte (1) liegt und teilweise in diese Platte eingreift.

2. Verfahren nach Anspruch 1, dadurch gekennzeichnet, daß der in der Platte (1) bzw. der Matrize (6) ausgebildete Schlitz bzw. die Schlitze (5, 12) mit einem freien peripheren Raum (10) in Verbindung stehen, welcher zwischen der Platte (1) und der Matrize (6) ausgebildet ist, so daß das gleiche Kunstharz gleichzeitig die Stege (2) zur Aufrechterhaltung der Wölbung und die Kanten (3) der Platte bildet.

3. Verfahren nach Anspruch 1 oder 2, dadurch gekennzeichnet, daß in der Oberseite der Matrize Querkanäle (14) ausgebildet sind, welche einerseits in die längsverlaufenden Schlitze (12) und andererseits in die periphere Kammer (10) münden, wobei diese Kanäle (14) bewirken, daß das Kunstharz Verbindungsbrücken (4) zwischen den längsverlaufenden Stegen (2) und den Kanten (3) der Platte bildet.

4. Verfahren nach Anspruch 1, dadurch gekennzeichnet, daß in der Unterseite der Platte (1) Blindbohrungen ausgebildet sind, welche sich mit dem Schlitz (12) der Matrize (6) decken, so daß der durch das in die Form eingespritzte Kunstharz gebildete Steg (2) entsprechende Finger formt, die in die Platte (1) eingreifen und die wirksame Verbindung des Steges mit der Platte darstellen.

5. Verfahren nach Anspruch 1, dadurch gekennzeichnet, daß die wirksame Verbindung zwischen der Platte (1) und dem durch das in den Schlitz (12) eingespritzte Kunstharz gebildeten Steg (2) auf chemischem oder physikalisch-chemischem Weg hergestellt wird.

6. Verfahren nach einem der Ansprüche 1 bis 5, dadurch gekennzeichnet, daß die Matrize (6) wenigstens eine mit dem Schlitz oder den Schlitzen (12) in Verbindung stehende Kammer aufweist, deren Form und Abmessungen die Form und die Abmessungen eines auf der Unterseite der Platte zu verwirklichenden Accessoires bestimmt.

7. Verfahren nach einem der Ansprüche 1 bis 6, dadurch gekennzeichnet, daß der Stempel (7) wenigstens eine mit der peripheren Kammer (10) in Verbindung stehende Kammer aufweist, deren Form und Abmessungen die Form und die Abmessungen eines auf der Oberseite der Platte zu verwirklichenden Accessoires bestimmt.

FIG.1

FIG.2

FIG.3

FIG.5

FIG.4